# EUROPÄISCHE PATENTSCHRIFT

(11) **EP 0 432 306 B1**
(45) Veröffentlichungstag und Bekanntmachung des Hinweises auf die Patenterteilung: **10.02.1993**
(21) Anmeldenummer: 89123214.2
(22) Anmeldetag: 15.12.1989
(51) Int. Cl.: B65F 1/08, B65F 1/14

(54) **Plakat-Säulen-Container**
Advertising column container
Conteneur en forme de colonne d'affichage

(43) Veröffentlichungstag der Anmeldung: 19.06.1991
(73) Patentinhaber: Harder, Hugo, 69120 Heidelberg (DE)
(72) Erfinder: Harder, Hugo, 69120 Heidelberg (DE)
(74) Vertreter: Hartmann, Günter, Dr. Dipl.-Chem.

(56) Entgegenhaltungen:
- WO-A-87/03564
- FR-A- 2 546 141
- US-A- 1 424 520

## Beschreibung

Die Erfindung betrifft einen neuen Plakat-Säulen-Container mit einem innen hohlen, zylinderförmigen Körper, einem Fußteil zur Verankerung des Containers im Erdboden und einer Abdeckung mit überstehendem Rand, bei dem in der Mantelfläche des zylinderförmigen Körpers mindestens eine Öffnung beliebiger Größe und mit beliebigem Querschnitt vorgesehen ist, die Zugang zum inneren Hohlraum des Containers verschafft, sowie dessen Verwendung sowohl als Plakatsäule als auch gleichzeitig als Container zum getrennten Sammeln von Altglas, Altpapier, Batterien, Kunststoff-, Metall- und sonstigen Abfällen sowie als Behälter zum Sammeln von Sperrmüll.

Mit dem steigenden Umweltbewußtsein der Bevölkerung und den immer strenger werdenden behördlichen Auflagen zur Gewährleistung eines angemessenen Umweltschutzes werden die Forderungen nach Recyclisierung eines möglichst hohen Anteils des täglich anfallenden Haushalts- und sonstigen Mülls immer dringlicher. Eine wesentliche Voraussetzung für die Recyclisierung des aus unterschiedlichen Materialien bestehenden Mülls ist dessen getrenntes Einsammmeln schon an den Stellen, an denen der Müll entsteht, beispielsweise in den Haushaltungen der einzelnen Bürger, da die unterschiedlichen Materialien, aus denen der Müll besteht, unterschiedliche Weiterverarbeitungsmethoden erfordert.

Die derzeitige Praxis ist die, daß in den Gemeinden und Städten an zentralen, meist etwas abseits gelegenen Orten verschiedene Behälter für die unterschiedlichen Abfallarten aufgestellt werden, beispielsweise Behälter für das Einsammeln von weißem, braunem und grünem Altglas, Behälter für Altpapier und Kartonagen sowie Behälter zum Sammeln von Sperrmüll. Verbrauchte Batterien müssen gar persönlich bei dafür ausgestatteten Stellen der Gemeinden oder Städte abgegeben werden.

Die zum Einsammeln der unterschiedlichen Müllarten aufgestellten Behälter sind außerordentlich unansehnlich und daher häufig mit Sichtblenden versehen. Dies ist auch der Grund dafür, warum diese Behälter an verhältnismäßig abgelegenen Stellen der Städte und Gemeinden aufgestellt werden, was natürlich zur Folge hat, daß die Anfahrtswege der Bürger zu den unterschiedlichen Müllsammelbehältern sehr lang sind. Dadurch wird die an sich bestehende grundsätzliche Bereitschaft der Bevölkerung, die mit der getrennten Einsammlung verschiedener Müllarten verbundenen zusätzlichen Mühen auf sich zu nehmen, nicht gerade gefördert.

Aus WO-A-87 03 564 ist bereits ein zweiteiliges Müllhäuschen mit integriertem Briefkasten bekannt, das auf einem Fußteil zur Verankerung im Erdboden ruht und mit einer Abdeckung mit überstehendem Rand versehen ist. Der untere und obere Abschnitt des bekannten Müllhäuschens sind innen hohl zur Aufnahme einer Mülltonne (unten) bzw. eines Sammelbehälters für Briefe (oben), zu denen mittels eingebauter Klapptürchen Zugang besteht. In der Außenwand des Müllhäuschens sind Öffnungen zum Einwerfen des Mülls (unten) bzw. der Briefe (oben) vorgesehen. Die übrigen Wandflächen können als Werbeflächen genutzt werden. Ein solches Müllhäuschen genügt den heutigen gestiegenen Anforderungen nicht mehr.

Aufgabe der Erfindung war es, einen neuartigen Vielzweck-Müllsammelbehälter zu konzipieren, der mindestens ebenso wirtschaftlich wie die bisher verwendeten Müllsammelbehälter ist, dabei aber attraktiver gestaltet ist, so daß er bürgernah an wesentlich mehr und besser geeigneten Stellen der Städte und Gemeinden, beispielsweise an größeren Straßenkreuzungen, Plätzen und dgl., aufgestellt werden kann, ohne daß dadurch das Ortsbild in unzumutbarer Weise beeinträchtigt wird.

Es wurde nun gefunden, daß diese Aufgabe erfindungsgemäß dadurch gelöst werden kann, daß anstelle der bisher eingesetzten zentralen Müllsammelbehälter Plakat-Säulen-Container verwendet werden, die das Aussehen und die Funktion der früher üblichen, in den letzten Jahren aber aus verkehrstechnischen Gründen aus den Städten und Gemeinden weitgehend verschwundenen Plakatsäulen haben, die aufgrund ihres geänderten inneren Aufbaus gleichzeitig als dezentral einsetzbare Müllsammelbehälter für unterschiedliche Müllsorten dienen können.

Gegenstand der Erfindung ist ein neuartiger Plakat-Säulen-Container mit einem innen hohlen, zylidnerförmigen Körper, einem Fußteil zur Verankerung des Containers im Erdboden und einer Abdeckung mit überstehendem Rand, der in der Mantelobefläche des zylinderförmigen Körpers mindestens eine Öffnung beliebiger Größe und mit beliebigem Querschnitt aufweist, die Zugang zum inneren Hohlraum des Containers verschafft und mit einem im Innern des zylinderförmigen Körpers vorgesehenen oben offenen Behälter, der dadurch gekennzeichnet ist, daß
der im Innern des zylinderförmigen Körpers vorgesehen Behälters ein zylindrischer Einkammer- oder Mehrkammer-Behälter ist, der sich über die gesamte Länge oder nur einen Teil des zylinderförmigen Körpers erstreckt, dessen äußere Oberfläche im Abstand von wenigen Zentimetern konzentrisch zur Innenwandoberfläche des zylinderförmigen Körpers verläuft und der in in die Innenwand des zylinderförmigen Körpers eingelassen Schienen so geführt wird, daß er von oben her in den zylindrischen Körper eingeführt und nach oben aus diesem herausgezogen werden kann, dessen oberer Rand mit mindestens zwei Ösen zum Herausziehen des Behälters versehen ist und dessen Mantelfläche mindestens eine Öffnung beliebiger Größe und beliebigen Querschnitts aufweist, die deckungsgleich zur mindestens einen Öffnung in der Mantelobefgläche des zylinderförmigen Körpers ist und
die Abdeckung als abnehmbare Haube oder als Deckel ausgebildet ist, der über mindestens ein Scharnier an das obere Ende des zylinderförmigen Körpers so angelenkt ist, daß sich der Deckel in jeder beliebigen Stellung zwischen dem geschlossenen und gëoffneten Zustand arretieren läßt.

Der erfindungsgemäße Plakat-Säulen-Container, der die Funktionen eines Müllsammelbehälters und einer Plakatsäule in sich vereinigt, kann aufgrund seiner attraktiven Gestältungsmöglichkeiten bürgernah an wesentlich mehr und besser geeigneten Stellen der Städte und Gemeinden, beispielsweise an größeren Straffenkreuzungen, Plätzen und dgl., aufgestellt werden, ohne daß dadurch das Ortsbild in unzumutbarer Weise beeinträchtigt wird.

Im Innern des zylinderförmigen Körpers ist ein oben offener zylindrischer Einkammer- oder Mehrkammer-Müll-Behälter vorgesehen, der sich über die gesamte Länge oder nur einen Teil der Länge des zylinderförmigen Körpers erstreckt und dessen äußere Oberfläche im Abstand von wenigen Zentimetern konzentrisch zur Innenwandoberfläche des zylindrischen Körpers verläuft. Dieser oben offene zylindrische Einkammer- oder Mehrkammer-Behälter wird durch geeignete Gestaltung seiner Oberfläche oder durch auf seiner Oberfläche angebrachte Schienen in in die Innenwand des umgebenden zylinderförmigen Körpers eingelassenen Schienen so geführt, daß er von oben her in den zylindrischen Körper eingeführt und nach oben aus diesem wieder herausgezogen werden kann. Sein oberer Rand ist mit mindestens zwei Ösen ausgestattet, an denen der Behälter aus dem zylinderförmigen Körper herausgezogen und in diesen eingelassen werden kann. Seine Manteloberfläche weist mindestens eine Öffnung beliebiger Größe und beliebigen Querschnitts auf, die so angeordnet ist, daß sie auf die Öffnung(en) in der Manteoloberfläche des zylinderförmigen Körpers ausgerichtet ist.

Gemäß einer bevorzugten Ausgestaltung der Erfindung ist der Innenbehälter in Richtung seiner Längsachse in zwei bis vier gleich große, oben offene Kammern unterteilt, die jeweils eine Öffnung in ihrer Umfangsfläche aufweisen, die deckungsgleich zu einer entsprechenden Öffnung in der Manteloberfläche des zylindrischen Körpers und auf diese ausgerichtet ist.

Die Öffnungen in dem zylindrischen Körper und die deckungsgleichen Öffnungen in dem Einkammer- oder Mehrkammer-Innenbehälter können einen rechteckigen oder runden Querschnitt und einen für die jeweils darin zu sammelnde Müllsorte geeignete Größe haben. Zum Sammeln von Altglas hat es sich beispielsweise als zweckmäßig erwiesen, in einer Höhe von beispielsweise 150 cm über dem Erdboden zwei nebeneinander liegende Öffnungen mit einem Durchmesser von jeweils etwa 20 cm vorzusehen, in welche die Altglasflaschen, getrennt nach Farbe, eingeworfen werden können.

Gemäß einer bevorzugten Ausgestaltung ist die Öffnung in dem Innenbehälter jeweils etwas weiter als die deckungsgleiche Öffnung in dem äußeren zylinderförmigen Körper, so daß die Möglichkeit besteht, an der Innenseite des äußeren zylinderförmigen Körpers eine Klappe anzubringen, welche die Öffnung in dem äußeren zylinderförmigen Körper jeweils durch Schwerkraft oder durch Federkraft selbsttätig schließt, um so für einen geruchs- und schalldichten Verschluß der jeweiligen Öffnungen zu sorgen.

Diese Klappen können durch geeignete farbliche Gestaltung oder durch eine entsprechende Aufschrift den Benutzer darauf hinweisen, welche Art von Müll in dem dahinerliegenden Behälter gesammelt wird.

Die Verschlußklappe kann selbstverständlich auch auf der Innenseite des Innenbehälters angebracht sein.

Den oberen Abschluß des erfindungsgemäßen Plakat-Säulen-Containers bildet eine Abdeckung mit überstehendem Rand, die entweder vollständig abnehmbar oder als Deckel ausgebildet sein kann, der mittels eines oder mehrerer Gelenke an dem oberen Rand des zylinderförmigen Körpers so befestigt sein kann, daß sich der Deckel in jeder beliebigen Stellung zwischen geschlossen und vollständig geöffnet arretieren läßt.

Die zuletztgenannte Ausgestaltung der Erfindung ist insbesondere dann vorteilhaft, wenn sich im zylindrischen Körper ein Einkammer-Behälter befindet, der zum Sammeln von Sperrmüll verwendet wird. Durch entsprechende Stellung des Säulendeckels kann dafür gesorgt werden, daß der Sperrmüll-Sammelbehälter auch bei schlechterer Witterung, beispielsweise bei Regenwetter, in Betrieb gehalten werden kann.

Der erfindungsgemäße Plakat-Säulen-Container kann in seinen Ausmaßen auf den jeweiligen Bedarf in beliebiger Weise abgestimmt werden, in der Regel hat er eine Gesamthöhe von etwa 2,50 m bis etwa 3,50 m über dem Erdboden und einen Gesamtdurchmesser von etwa 1,20 m bis etwa 1,80 m.

Normalerweise wird der erfindungsgemäße Plakat-Säulen-Container auf eine gelochte Beton-Platte gestellt und in geeigneter Weise darauf verankert.

Es ist aber auch möglich, den zylinderförmigen Körper des Plakat-Säulen-Containers bis zu einer Tiefe von etwa 1 m in den Erdboden hineinragen zu lassen, um die Kapazität des inneren Hohlraums für das Sammeln von Müll zu erhöhen, die ja dadurch begrenzt ist, daß die Höhe der Öffnungen für den Einwurf des gesammelten Mülls der menschlichen Größe angepaßt sein muß und in der Regel 1,50 m nicht übersteigen wird.

Es ist auch möglich, zur Verbesserung der Standfestigkeit des Plakat-Säulen-Containers, diesen in einen Beton-Ring mit einem Querschnitt von beispielsweise 25 cm x 25 cm hineinzustellen, der nicht nur als Treppenstufe dienen kann, der eine verbesserte Ausnutzung der Innenhöhe des Müllsammelbehälters erlaubt, sondern der auch als Abstellfläche oder Sitzfläche dienen kann.

Durch entsprechende Gestaltung des inneren Sammelbehälters können in dem erfindungsgemäßen Plakat-Säulen-Container verschiedene Müllarten gesammelt werden, wie z.B. Altglas, getrennt nach den Farben Weiß, Grün und Braun, Altpapier, Batterien, Kunststoff-, Metall- und sonstige Abfälle. Der Gesamtcontainer kann aber auch als Behälter zum Sammeln von Sperrmüll zu vorher festgelegten Zeiten verwendet werden.

Die Untergliederung des Innenbehälters in Kammern kann fest sein oder der Innenbehälter kann aus unterschiedlichen, getrennt herausziehbaren Segmenten bestehen, um dem unterschiedlichen Füllungsgrad dieser Segmente je nach Häufigkeit des darin gesammelten Mülls Rechnung zu tragen.

Der erfindungsgemäße Plakat-Säulen-Container eigent sich besonders für die dezentrale Einsammlung der verschiedenen Müllarten an verschiedenen Plätzen und Straßenkreuzungen der Gemeinden und Städte, wodurch die Wege des Bürgers von seiner Wohnung zu dem Müllsammelbehälter bedeutend verkürzt werden können. Da der erfindungsgemäße Plakat-Säulen-Container ansprechend gestaltet werden kann, wird eine Beeinträchtigung des Ortsbildes dadurch vermieden. Er kann wie die früher üblichen Plakatsäulen, die als Verkehrshindernisse in den vergangenen Jahren weitgehend entfernt wurden, außerdem als Plakatsäule mit entsprechenden Werbeaufdrucken genutzt werden, wodurch die Müllentsorgung auch wirtschaftlich attraktiver als bisher gestaltet werden kann, da die Einnahmen für die Werbung für die Müllentsorgung eingesetzt werden können.

Diese Entwicklung wird dadurch begünstigt, daß in den Wohngebieten der Städte und Gemeinden eine sehr starke Verkehrsberuhigung bis hin zur reinen Fußgängerzone immer mehr in den Vordergrund rückt, so daß die früheren Beweggründe, die zur Entfernung der Plakatsäulen als Verkehrshindernisse geführt haben, heute nicht mehr gegeben sind. Die Plakatsäulen können zu dem durch entsprechende äußere Gestaltung zu örtlichen Kommunikationszentren, Mittelpunkten von Spielplätzen und dgl. werden, wodurch der Bürger zu einem umweltbewußten Verhalten nicht zuletzt auch aufgrund der deutlich verkürzten Zugangswege sehr stark motiviert wird. Die heute üblichen Wege zu weit entfernten Gemeindezentren (zur Ablieferung der verbrauchten Batterien) oder zu Papier-Containern entfallen mit dem erfindungsgemäßen neuen Plakat-Säulen-Container, dessen Abdeckung(Haube) zweckmäßig in der Signalfarbe "Umweltschutzgrün" gehalten ist.

Der erfindungsgemäße Plakat-Säulen-Container, der aus einem beliebigen Material gefertigt sein kann, sofern dieses eine ausreichende mechanische Festigkeit und Tragfähigkeit besitzt, kann aus Metall, insbesondere Stahlblech, das gegebenenfalls verzinkt sein kann, aus Beton oder Eternit bestehen. Seine Abdeckung kann aus dem gleichen Material bestehen, wobei in diesem Falle Beton seltener verwendet werden wird schon aufgrund seines hohen Gewichts. Der erfindungsgemäße Plakat-Säulen-Container läßt sich besonders wirtschaftlich gestalten durch Aufbau aus vorgefertigten Betonringen, die aufeinandergesetzt werden und in beliebiger Größe großtechnisch produziert werden können.

Der im Innern des zylinderförmigen Körpers angeordnete Einkammer- oder Mehrkammer-Innenbehälter, der auch aus mehreren Teilbehältern bestehen kann, wird zweckmäßig aus Metall, insbesondere Stahlblech, das gegebenenfalls verzinkt sein kann, oder Kunststoff bestehen, wobei auch hier auf eine ausreichende mechanische Festigkeit und Belastbarkeit zu achten ist.

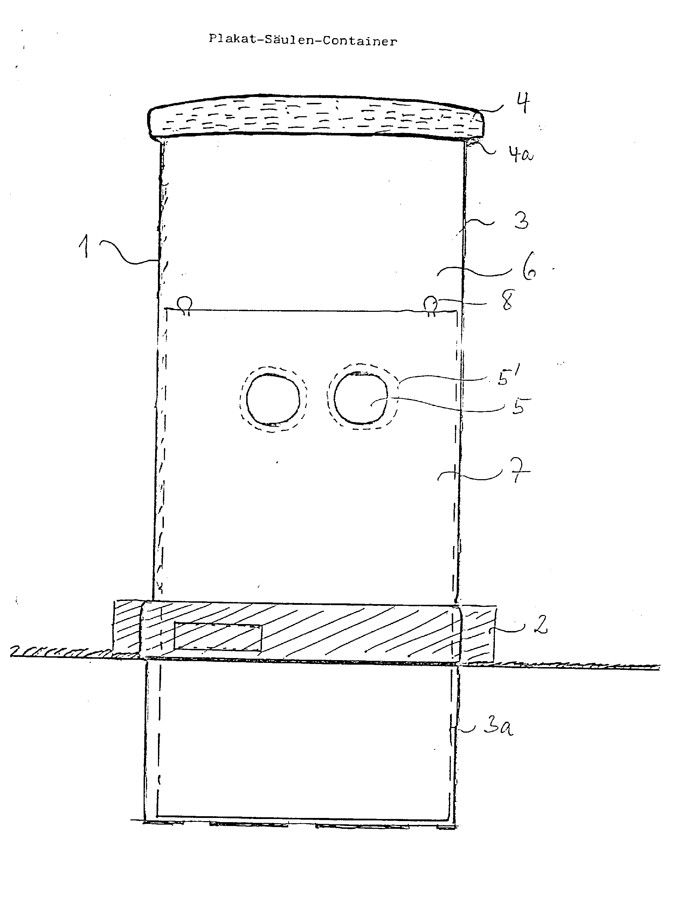

Ein erfindungsgemäßer Plakat-Säulen-Container ist in der beiliegenden Zeichnung schematisch dargestellt. Der Container 1 besteht aus dem Fußteil 2, das der Verankerung des Containers 1 im Erdboden dient, einem zylinderförmigen Körper 3, der bis zu einer Tiefe von etwa 1 m im Erdreich versenkt sein kann (3a) und oben durch eine Abdeckung 4 mit überstehendem Rand 4a abgeschlossen ist. Die Abdeckung 4 kann, wie bereits oben erwähnt, als abnehmbare Haube oder als angelenkter Deckel ausgebildet sein. Im Inneren Hohlraum des zylinderförmigen Körpers 3 befindet sich ein Müllsammelbehälter 7, der sich über die gesamte Länge des inneren Hohlraums 3 oder nur über einen Teil der selben erstreckt. Seine Mantelfläche verläuft konzentrisch zur inneren Oberfläche des zylinderförmigen Körpers 3 und er ist an seinem oberen Rand mit einer geeigneten Anzahl von Ösen 8 ausgestattet, die das Einführen und Herausnehmen des inneren Müllsammelbehälters mittels eines geeigneten Kranserlauben.

In einer geeigneten Höhe sind in der äußeren Oberfläche des zylindrischen Körpers 3 ein oder mehrere Öffnungen 5 mit unterschiedlicher Gestalt und unterschiedlicher Größe vorgesehen, denen deckungsgleiche entsprechende Öffnungen 5′ in dem inneren Müllsammelbehälter 7 gegenüberliegen. Die Öffnungen 5 oder 5′ können durch eine innen angelenkte Klappe geruchs- und schalldicht verschlossen sein.

Die Gestaltung des inneren Müllsammelbehälters 7 kann auf die jeweiligen Bedürfnisse am Ort der Aufstellung des Plakat-Säulen-Containers abgestimmt werden, das heißt, die Unterteilung in Kammern kann entsprechend den am jeweiligen Aufstellungsort anfallenden Müllmengen und Müllsorten gestaltet werden.

## Patentansprüche

1. Plakat-Säulen-Container mit einem innen hohlen, säulenförmigen Körper (3), einem Fußteil (2) zur Verankerung des Containers (1) im Erdboden und einer Abdekkung (4) mit überstehendem Rand (4a), der in der Manteloberfläche des säulenförmigen Körpers (3) mindestens eine Öffnung (5) beliebiger Größe und mit beliebigem Querschnitt aufweist, die Zugang zum inneren Hohlraum (6) des Container (1) verschafft, und mit einem im Innern des säulenförmigen Körpers vorgesehenen oben offenen Behälter (7),
dadurch **gekennzeichnet**, daß
der im Innern des zylinderförmig ausgestalteten Körpers (3) vorgesehene Behälten (7) ein zylindrischer Einkammer- oder Mehrkammer-Behälter (7) ist, der sich über die gesamte Länge oder nur einen Teil des zylinderförmigen Körpers (3)erstreckt, dessen äußere Oberfläche im Abstand von wenigen Zentimetern konzentrisch zur Innenwandoberfläche des zylinderförmigen Körpers (3) verläuft und der in in die Innenwand des zylinderförmigen Körpers (3) eingelassenen Schienen so geführt wird, daß er von oben her in den zylindrischen Körper (3) eingeführt und nach oben aus diesem heruasgezogen werden kann, dessen oberer Rand mit mindestens zwei Ösen (8) zum Herausziehen des Behälters versehen ist und dessen Mantelfläche mindestens eine Öffnung (5′) beliebiger Größe und beliebigen Querschnitts aufweist, die deckungsgleich zur mindestens einen Öffnung (5) in der Manteloberfläche des zylinderförmigen Körpers (3) ist und
die Abdeckung (4) als abnehmbare Haube oder als Deckel ausgebildet ist, der über mindestens ein Scharnier an das obere Ende des zylinderförmigen Körpers (3) so angelenkt ist, daß sich der Deckel in jeder beliebigen Stellung zwischen dem geschlossenen und geöffneten Zustand arretieren läßt.

2. Plakat-Säulen-Container nach Anspruch 1, dadurch gekennzeichnet, daß der Innenbehälter (7) in Richtung seiner Längsachse in zwei bis vier gleich große, oben offene Kammern unterteilt ist, die jeweils eine Öffnung in ihrer Umfangsfläche aufweisen, die deckungsgleich zur entsprechenden Öffnung in der Manteloberfläche des zylinderförmigen Körpers (3) und auf diese ausgerichtet ist.

3. Plakat-Säulen-Container nach Anspruch 1 oder 2, dadurch gekennzeichnet, daß die Öffnung(en) (5) in dem zylinderförmigen Körper (3) und die Öffnung(en) (5′) in dem Einkammer- oder Mehrkammer-Innenbehälter deckungsgleich sind und einen rechteckigen oder runden Querschnitt haben.

4. Plakat-Säulen-Container nach Anspruch 3, dadurch gekennzeichnet, daß die Öffnung (en) (5′) in dem Einkammer- oder Mehrkammer-Innenbehälter etwas weiter ausgeschnitten ist (sind) als die deckungsgleiche(n) Öffnung(en) in dem zylinderförmigen Körper (3) und daß jede Öffnung (5) oder (5′) eine innen angelenkte, durch Schwerkraft oder Federkraft schließende Klappe aufweist, die den Zugang zum Innern des Container (1) geruchs- und schalldicht verschließt.

5. Plakat-Säulen-Container nach einem der Ansprüche 1 bis 4, dadurch gekennzeichnet, daß der zylinderförmige Körper (3) bis zu einer Tiefe von 1 m in den Erdboden versenkt ist und aus Metall, insbesondee Stahlblech (gegebenenfalls verzinkt), Beton oder Eternit besteht.

6. Plakat-Säulen-Container nach einem der Ansprüche 1 bis 5, dadurch gekennzeichnet, daß die Abdeckung (4) und der Innenbehälter (7) aus Metall, insbesondere Stahlblech (gegebenenfalls verzinkt), oder Kunststoff bestehen.

7. Plakat-Säulen-Container nach einem der Ansprüche 1 bis 6, dadurch gekennzeichnet, daß er eine Gesamthöhe über dem Erdboden von 2,50 m bis 3,50 m und einen Gesamtdurchmesser von 1,20 m bis 1,80 m hat.

8. Verwendung des Plakat-Säulen-Containers nach einem der Ansprüche 1 bis 7 sowohl als Plakatsäule als auch gleichzeitig als Container zum getrennten Sammeln von Altglas, Altpapier, Batterien, Kunststoff-, Metall- und sonstigen Abfällen sowie als Behälter zum Sammeln von Sperrmüll.

## Claims

1. An advertising column-container comprising an inside hollow columnar body (3), a base (2) for anchoring the container (1) in the ground and a cover (4) having a projecting rim (4a), said advertising column-container having in the mantle surface of the columnar body (3) at least one opening (5) of any arbitrary size and cross-section which gives access to the inner cavity (6) of the container (1), and a container (7) open at the top which is provided inside the columnar body
**characterized** in that
the container (7) provided inside the cylindrical body (3) is a cylindrical one-compartment or multi-compartment container (7) extending over the whole length or only a part of the cylindrical body (3), the outer surface of the container (7) extending concentrically to the inner wall surface of the cylindrical body (3) in a distance of a few centimeters therefrom, and being guided by rails embedded in the inner wall of the cylindrical body (3) in such a manner that the container (7) can be inserted from above into and pulled out overhead from the cylindrical body (3), the upper rim of the container (7) being provided with at least two loops (8) for pulling out the container (7) and the mantle surface of which having at least one opening (5′) of any arbitrary size and cross-section which is congruent with the at least one opening (5) in the mantle surface of the cylindrical body (3) and
the cover (4) is in the form of a removable hood or a lid hinged by at least one joint to the top end of the cylindrical body (3) in such a manner that the lid can be arrested in any position between the closed and the open state.

2. The advertising column-container according to claim 1, characterized in that the inner container (7) along its longitudinal axis is divided into two to four compartments of equal size which are open at the top end and each have one opening in their mantle surface, the said opening being congruent with and in alignment with the corresponding opening in the mantle surface of the cylindrical body (3).

3. The advertising column-container according to claim 1 or 2, characterized in that the opening(s) (5) in the cylindrical body (3) and the opening(s) (5′) in the one-compartment or multi-compartment inner container are congruent with each other and have a rectangular or round cross-section.

4. The advertising column-container according to claim 3, characterized in that the opening(s) (5′) in the one-compartment or multi-compartment inner container are cut out a little larger than the congruent opening(s) in the cylindrical body (3) and that each opening (5) or (5′) has a interiorly hinged flap which shuts by gravity or resilience and which locks the access to the interior of the container (1) in an odour-proof and sound-proof manner.

5. The advertising column-container according to any of claims 1 to 4, characterized in that the cylindrical body (3) is inserted into the ground until to a depth of 1 m and is made of a metal, especially of a steel sheet (optionally coated with zinc), of concrete or of eternit.

6. The advertising column-container according to any of claims 1 to 5, characterized in that the cover (4) and the inner container (7) are made of a metal, especially of a steel sheet (optionally coated with zinc), or of a plastic material.

7. The advertising column-container according to any of claims 1 to 6, characterized in that its total height above the ground is 2,50 m to 3,50 m and its total diameter is 1,20 m to 1,80 m.

8. A use of the advertising container according to any of claims 1 to 7 both as an advertising column and simultaneously as a container for separately collecting waste glass, waste paper, batteries, plastic, metal and other waste materials as well as a container for collecting bulky waste products.

## Revendications

1. Container-colonne d'affichage avec un corps interne creux en forme de colonne (3), une embase (2) pour l'ancrage du container (1) dans le sol et un recouvrement (4) à bord saillant (4a), qui comprend dans la surface génératrice du corps en forme de colonne (3) au moins une ouverture (5) de taille et de section quelconques, qui donne accès à la cavité interne (6) du container (1), et avec un récipient (7) ouvert vers le haut prévu à l'intérieur du corps en forme de colonne,
caractérisé par le fait que
le récipient (7) prévu à l'intérieur du corps cylindrique (3) est un récipient (7) cylindrique à une ou plusieurs chambres, qui s'étend sur toute la longueur ou seulement sur une partie de la longueur du corps cylindrique (3), sa surface extérieure s'étendant, avec un écart de quelques centimètres, concentriquement par rapport à la surface de la paroi intérieure du corps cylindrique (3), et qui est mené dans des glissières intégrées dans la paroi intérieure du corps cylindrique (3) de telle façon qu'il peut être introduit le corps cylindrique (3) par le haut dans et peut être retiré de ce corps vers le haut, son bord supérieur étant pourvu d'au moins deux anneaux (8) pour retirer le récipient, et sa surface génératrice comprenant au moins une ouverture (5′) de taille et de section quelconques, qui est congruente avec la au moins une ouverture (5) dans la surface génératrice du corps cylindrique (3) et que
le recouvrement (4) a la forme d'une hotte amovible ou d'un couvercle, qui est articulé par l'intermédiaire d'au moins une charnière à l'extrémité supérieure du corps cylindrique (3), de telle façon que le couvercle peut être arrêté dans toute position désirée entre l'état fermé et l'état ouvert.

2. Container-colonne d'affichage selon la revendication 1, caractérisé par le fait que le récipient intérieur (7) est divisé en direction de son axe longitudinal dans deux à quatre chambres de même taille ouvertes vers le haut, qui comprennent chacune respectivement une ouverture dans leur surface génératrice, qui est congruente avec l'ouverture correspondante dans la surface génératrice du corps cylindrique (3) et alignée avec celle-ci.

3. Container-colonne d'affichage selon la revendication 1 ou 2, caractérisé par le fait que la (les) ouverture(s) (5) dans le corps cylindrique (3) et la (les) ouverture(s) (5′) dans le récipient à une chambre ou à plusieurs chambres sont congruentes et ont une section rectangulaire ou sphérique.

4. Container-colonne d'affichage selon la revendication 3, caractérisé par le fait que la (les) ouverture(s) (5′) dans le récipient à une chambre ou à plusieurs chambres sont découpées un peu plus grandes que la (les) ouverture(s) congruente(s) dans le corps cylindrique (3) et que chaque ouverture (5) ou (5′) comprend une trappe articulée à l'intérieur et fermant par gravité ou par force de ressort, qui ferme l'accès à l'intérieur du container (1) de façon inodore et insonore.

5. Container-colonne d'affichage selon l'une des revendications 1 à 4, caractérisé par le fait que le corps cylindrique (3) est enfoncé dans le sol jusqu'à une profondeur de 1 m et qu'il est fait en métal, en particulier tôle d'acier (éventuellement zinguée), en béton ou éternit.

6. Container-colonne d'affichage selon l'une des revendications 1 à 5, caractérisé par le fait que le recouvrement (4) et le récipient intérieur (7) sont en métal, en particulier en tôle d'acier (éventuellement zinguée) ou en plastique.

7. Container-colonne d'affichage selon l'une des revendications 1 à 6, caractérisé par le fait qu'il a une hauteur totale au-dessus du sol de 2,50 m à 3,50 m et un diamètre total de 1,20 m à 1,80.

8. Utilisation du container-colonne d'affichage selon l'une des revendications 1 à 7, aussi bien en tant que colonne d'affichage qu'en tant que container pour le ramassage séparé des verres usés, de papier à recycler, de piles, déchets plastiques, métalliques et autres, ainsi qu'en tant que container pour le ramassage des vieux objets encombrants.
